# EUROPEAN PATENT SPECIFICATION

(11) **EP 3 323 555 B1**
(45) Date of publication and mention of the grant of the patent: **06.11.2019**
(21) Application number: 17202794.8
(22) Date of filing: 21.11.2017
(51) Int. Cl.: B25B 29/02

(54) **SCREW TENSIONING DEVICE**
SCHRAUBENSPANNVORRICHTUNG
DISPOSITIF DE TENSION DE VIS

(30) Priority: 21.11.2016 GB 201619612
(43) Date of publication of application: 23.05.2018
(73) Proprietor: Caterpillar Energy Solutions GmbH, 68167 Mannheim (DE)
(72) Inventor: GUISASOLA, Inigo, 76829 Landau in der Pfalz (DE)
(74) Representative: BRP Renaud & Partner mbB Rechtsanwälte Patentanwälte Steuerberater

(56) References cited:
- DE-A1- 2 238 974
- SU-A1- 569 447
- DJOZIC S: "VORRICHTUNG ZUM VORSPANNEN GROSSER SCHRAUBVERBINDUNGEN", WERKSTATT + BETRIEB, CARL HANSER VERLAG, MÜNCHEN DE, vol. 124, no. 8, 1 August 1991 (1991-08-01), page 651, XP000243310, ISSN: 0043-2792

## Description

### Technical Field

The present disclosure relates to a to a screw tensioning for tensioning and/or loosening tensionable screw connections.

### Background

In addition to the basic forms of various screw connections, so called tensionable screw connections have already been used for decades. In particular screw tensioning devices are used in steel constructions and various engine design applications. Screw tensioning devices all operate generally according to the same well known principle based on torque-free tensioning methods. In order to apply tension to a screw or bolt, the first end of said screw is typically connected to a first component via threaded means. The second end is then extended through a second component. A nut may then be placed on the screw to secure the first and second components. Tension may then be applied to the screw. The nut may then be further tightened to maintain the tension applied to the screw. After the nut is tightened the screw tensioning device may be disconnected from the screw.

US Patent No. 9, 188, 146 ('146 reference) relates to a hydraulic rod tensioning system for tensioning an elongated fastening member. The ' 146 reference discusses a puller screw for selectively engaging and tensioning a stud that projects from structural members. The hydraulic rod tensioning system includes a nut for engaging the puller screw. A cylinder of hydraulic rod tensioning system is configured to engage the nut. At least one locking member is positioned within a bore of the cylinder for engaging the nut to fixedly position the nut relative to the cylinder. Further, a piston is movably positioned within the cylinder, and is engaged with at least two posts disposed in axial bores of the nut. Furthermore, at least one spring may be disposed between the nut and the piston.

SU 569447 A and DE 2 238 974 A each show a screw tensioning device for tensioning or loosening tensionable screw connections. Each device comprises a fixation element to be connected to a screw and a support element. The fixation and support elements are moveable relative to each other to apply tension to or remove tension from the screw. The fixation element is part of a piston movable within the support element. An actuator assembly includes an actuator element coupled to the piston. A volume containing a fluid is defined by the piston and the support element. A movement of the actuator element causes an axial movement of the piston-fixation-element within the support element, and the movement of the piston-fixation-element manipulates the volume and thereby moves the piston-fixation-element with respect to the support element.

### Summary of the Invention

According to an aspect of the disclosure a screw tensioning device for tensioning or loosening tensionable screw connections is disclosed. The screw tensioning device includes a fixation element, a support element, a piston, an actuator assembly, and a volume defined at least partly by the piston, the fixation element, or the support element. The volume contains a fluid. The fixation element is configured to be connected to a screw. The support element is moveable relative to the fixation element and is arranged to be moved relative to the fixation element to apply tension to or remove tension from the screw. The piston is positioned and movable within the fixation element. The piston includes a rod end, a rod portion, and a groove. The fixation element includes a protrusion extending radially inwards and engaged with the groove to prevent a rotational movement of the piston within the fixation element. The actuator assembly includes an actuator element. The actuator element has a first threaded connection with the rod portion of the piston. A movement of the actuator element causes an axial movement of the piston within the fixation element, and the movement of the piston manipulates the volume, moving the fixation element with respect to the support element.

The actuator element may be coupled to the fixation element by a second threaded connection. The second threaded connection may be one of a left hand threaded connection or a right hand threaded connection and the first threaded connection is the other of the left hand threaded connection or the right hand threaded connection. The actuator element is a first actuator element and the actuator assembly further includes a second actuator element having a third threaded connection with the first actuator element.

The first actuator element may be a shaft having a first end portion engaged with the piston and a second end portion engaged with the second actuator element.

The piston may include a cavity formed at the rod end to receive the first end portion of the first actuator element, the cavity may include inner threads to form the first threaded connection with the first actuator element, and the first actuator element may include a recess formed at the second end portion to receive the second actuator element, the recess may include internal threads to form the third threaded connection with the second actuator element.

The second actuator element may include a stopper structure to limit an axial movement of the first actuator element relative to the second actuator element.

The first actuator element may be a sleeve having an inner surface with a first end portion and a second end portion, wherein the first end portion may be engaged with the piston and the second end portion may be engaged with the second actuator element.

The first threaded connection may be one of a left hand threaded connection or a right hand threaded connection and the third threaded connection may be the other of the left hand threaded connection or the right hand threaded connection. The actuator assembly may further include a worm shaft engaged with the sleeve. A main axis of movement of the piston may be inclined to a rotational axis of the worm shaft. The second actuator element may be coupled to the fixation element by a fourth threaded connection. The fourth threaded connection together with the third threaded connection may be configured to prevent a movement of the second actuator element when a movement of the first actuator element is enabled by an actuation of the worm shaft. The piston may include a groove and the fixation element may include a protrusion extending radially inwards and engaged with the groove to prevent a rotational movement of the piston within the fixation element. The piston may include a cavity formed in the rod portion to receive the actuator element, the cavity includes inner threads to engage with the actuator element.

The screw tensioning device may further comprising a first sealing ring between the piston and the fixation element, the first sealing ring is positioned in proximity to the rod end.

The screw tensioning device may further comprise a second sealing ring between the piston and the fixation element, the second sealing ring is positioned in proximity to a head end of the piston. A main axis of movement of the piston may be parallel to a main axis of the screw. A fluid within the volume that is at least partly defined by the piston, the fixation element and the support element, may be pressurized in response to a linear movement of the piston relative to the fixation element, thereby moving the fixation element in respect to the support element.

### Brief Description of the Drawings

FIG. 1 illustrates a diagrammatic sectional view of a screw tensioning device, in accordance with an embodiment of the disclosure;
FIG. 2 illustrates a diagrammatic sectional view of a screw tensioning device, in accordance with an alternative embodiment of the disclosure;
FIG. 3 illustrates a diagrammatic sectional view of a screw tensioning device, in accordance with an alternative embodiment of the disclosure; and
FIG. 4 illustrates a diagrammatic sectional view of a screw tensioning device, in accordance with an alternative embodiment of the disclosure.

### Detailed Description

Reference will now be made in detail to specific embodiments or features, examples of which are illustrated in the accompanying drawings. Generally, corresponding reference numbers will be used throughout the drawings to refer to the same or corresponding parts. Also, wherever possible, the same reference numbers will be used throughout the drawings to refer to the same or the like parts.

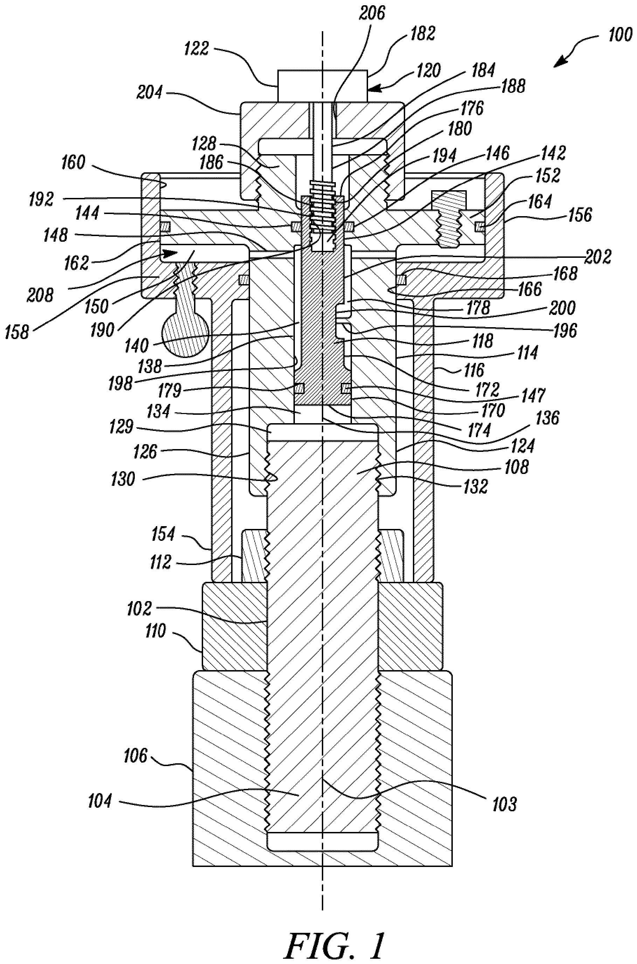

Referring to FIG. 1, one exemplary embodiment of a screw tensioning device 100 for tensioning or loosening screw connections is shown. The screw tensioning device 100 may be used to preload or untighten a tensionable screw connection. As used in this disclosure, screw may be a conventional screw, bolt or tensionable connection device. The term "tensionable" as defined throughout this disclosure shall mean that feature of an element, in particular a screw, comprising a portion that may be stretched by force and is able to store an amount of elastic energy. In particular a tensionable element may also be a screw 102, which comprises a first end 104 to be fixed to a first component 106 and a second end 108 which is positioned on a side of a second component 110, which is opposite to a side of the second component 110 facing the first component 106, and an elastic part, which is positioned between the first end 104 and the second end 108 and may be stretched by applying force to the second end 108.

As shown in FIG. 1, the screw 102 is tensionable and is configured to connect the first component 106 to the second component 110. For example, the first component 106 may be an engine crank case and the second component 110 may be a turbo charger mount. The screw 102 may be fixed to the first component 106 by means of a threaded engagement. The screw 102 may extend through or along the second component 110 and held in place with a nut 112. The nut 112 may also be in threaded engagement with the screw 102.

Referring to FIG. 1, the screw tensioning device 100 includes a fixation element 114, a support element 116, a piston 118, and an actuator assembly 120 having an actuator element 122. The fixation element 114 is connectable to the screw 102. The fixation element 114 includes a cylindrical portion 124 having a first end 126 and a second end 128. At the first end 126, the fixation element 114 includes a cylindrical recess 129 to house the second end 108 of the screw 102, while the first end 104 of the screw 102 is connected to the first component 106 through the threaded engagement. The recess 129 includes internal threads 130 formed on a side wall of the fixation element 114 to engage with threads 132 formed at the second end 108 of the screw 102.

The fixation element 114 further includes a bore 134 extending along a main axis 136 of the fixation element 114. The bore 134 extends from the second end 128 of the cylindrical portion 124 to the recess 129 formed at the first end 126 of the cylindrical portion 124, and is configured to receive the piston 118. A diameter of the bore 134 may be less than the diameter of the recess 129, and thereby together may form a stepped opening within the fixation element 114. Further, the bore 134 includes a variable diameter along the main axis 136. In other words, a wall 138 of the fixation element 114 has variable width along the length of the bore 134 such that diameter of the bore 134 changes along the length of the bore 134. As shown in FIG. 1, the bore 134 includes a wider portion 140 and a narrower portion 142. At the wider portion 140, a distance between the piston 118 and the wall 138 may be greater than the narrower portion 142. As shown in FIG. 1, at the narrower portion 142, the piston 118 contacts the wall 138. The narrower portion 142 also includes a groove 144 formed in the wall 138 and extending along a perimeter of the bore 134. A first sealing ring 146 may be disposed in the groove 144 to form a seal joint between the piston 118 and the fixation element 114. The first sealing ring 146 is positioned between the piston 118 and the fixation element 114, and in proximity to the rod end 176 of the piston 118.

Further, the fixation element 114 includes one or more openings 148 extending through the wall 138. The openings 148 extend radially outwards from the bore 134 and may be substantially perpendicular to the main axis 136. Each opening 148 may be formed in the wall 138 at the wider portion 140 of the bore 134 and in proximity to the narrower portion 142 of the bore 134. The openings 148 allow a flow of fluid from the bore 134 to a chamber 150 formed between the fixation element 114 and the support element 116, and vice versa.

The fixation element 114 also includes a plate 152 extending radially from the cylindrical portion 124 of the fixation element 114. The plate 152 is positioned normal to the main axis 136 of the fixation element 114 and is proximal to the second end 128 of the cylindrical portion 124. The plate 152 is cylindrical in shape and forms a flange portion in proximity to the second end 128 of the cylindrical portion 124.

The fixation element 114 is received at least partly within the support element 116. The support element 116 is arranged and adapted to be moved relative to the fixation element 114 to apply tension (pretense) or remove tension (loosen) the screw 102. The support element 116 includes a first cylindrical portion 154 and a second cylindrical portion 156 connected to one another by a connection portion 158. The first cylindrical portion 154 forms a lower part of the support element 116 to be positioned on the second component 110. The first cylindrical portion 154 surrounds a part of the screw 102, the first end 126 of the fixation element 114, and a portion of the cylindrical portion 124 of the fixation element 114. The first cylindrical portion 154 surrounds the portion of the cylindrical portion 124 which is lower to the plate 152. The second cylindrical portion 156 is spaced away from the first cylindrical portion 154 by the connection portion 158. The second cylindrical portion 156 surrounds the plate 152 of the fixation element 114 such that an inner surface 160 of the second cylindrical portion 156 contacts an outer surface 162 of the plate 152. Therefore, the plate 152 is positioned within the second cylindrical portion 156 of the support element 116, and is configured to move relative to the second cylindrical portion 156. Further, a first sealing element 164 may be positioned between the inner surface 160 of the second cylindrical portion 156 and the outer surface 162 of the plate 152 to prevent leakage of a fluid. The first sealing element 164 may be positioned at least partly in a groove formed either into the inner surface 160 of the second cylindrical portion 156 or into the outer surface 162 of the plate 152. As shown in FIG. 1, the first cylindrical portion 154, the second cylindrical portion 156, and the connection portion 158 are hollow cylindrical portions having inner diameters different from each other, thereby forming stepped configurations with each other. As shown in FIG. 1, the inner diameter of the connection portion 158 is smaller than the inner diameters of both the first cylindrical portion 154 and the second cylindrical portion 156.

Therefore, a side wall 166 of the connection portion 158 may act as a guide for the movement of the fixation element 114 relative to the support element 116. The connection portion 158 may further define a recess in which a second sealing element 168 may be disposed. The second sealing element 168 may seal the fixation element 114 with the connection portion 158 to prevent any fluid leakage.

The plate 152, connection portion 158, and the second cylindrical portion 156 of the support element 116 together form the chamber 150. The chamber 150 is fluidly connected to the bore 134 via the openings 148 in the fixation element 114. The chamber 150 is configured to receive the fluid from bore 134 due to an axial movement of the piston 118 slidably positioned within the bore 134.

The piston 118 includes a head portion 170, a rod portion 172, a head end 174, and a rod end 176. The piston 118 is positioned and movable within the fixation element 114. The piston 118 is slidably positioned into the bore 134 such that the head end 174 is distal from the second end 128 of the fixation element 114 and rod end 176 is proximal to the second end 128 of the fixation element 114. A diameter of the rod portion 172 is smaller than a diameter of the head portion 170, such that a piston chamber 178 is formed between the rod portion 172, head portion 170, and wall 138 of the bore 134. The head portion 170 is configured to abut against the wall 138 of the bore 134. The head portion 170 includes a groove 179, and a second sealing ring 147 is positioned within the groove 179 to prevent fluid leakage from the piston chamber 178. The second sealing ring 147 is positioned between the piston 118 and the fixation element 114, and in proximity to the head end 174 of the piston 118.

Further, at least a portion of the rod portion 172 may extend beyond the narrower portion 142 of the bore 134, towards the second end 128 of the fixation element 114. As the piston 118 moves inside the bore 134, the fluid inside the piston chamber 178 is moved to the chamber 150 via the openings 148, and vice versa. The piston 118 is moved inside the bore 134 by operating the actuator assembly 120.

Again referring to FIG. 1, the actuator assembly 120 includes the actuator element 122 connected to the rod portion 172 of the piston 118, and configured to move the piston 118 inside the bore 134. The actuator element 122 is connected with the rod portion 172 by a first threaded connection 180. As shown in FIG. 1, the actuator element 122 is a screw having a head portion 182 positioned outside the fixation element 114 and a shaft portion 184 positioned at least partly within the fixation element 114. The shaft portion 184 includes threads 186 formed at an outer surface 188 of the shaft portion 184, and adapted to engage with inner threads 190 formed at an inner surface 192 of a cavity 194 formed in the rod portion 172 of the piston 118. The cavity 194 extends axially from the rod end 176 of the piston 118 towards the head portion 170. As the actuator element 122 is rotated by operating the head portion 182, the threads 186 formed at the shaft portion 184 rotates relative to inner threads 190 formed in the cavity 194. In response to the rotation of the threads 186 of actuator element 122, the piston 118 moves in a linear and axial direction within the bore 134. As shown in FIG. 1, the piston 118 may move in an upward direction (i.e. towards the second end 128 of the fixation element 114) in response to a clock-wise rotation of the actuator element 122. This may cause a displacement of the fluid from the piston chamber 178 to the chamber 150 through the openings 148.

Further, the fixation element 114 may include a guide structure 196 to guide the linear and axial movement of the piston 118 inside the bore 134. The guide structure 196 is configured to restrict and prevent rotational movement of the piston 118 about the main axis 136 within the bore 134. As shown in FIG. 1, the guide structure 196 may include a protrusion extending radially inwardly from an inner surface 198 of the bore 134 towards the main axis 136 of the bore 134. The guide structure 196 is in engagement with a mating structure 200 of the piston 118. The mating structure 200 may be formed at an outer surface 202 of the piston 118. As shown in FIG. 1, the mating structure 200 includes a groove extending in an axial direction along the length of the piston 118 to receive the protrusion.

Further, the screw tensioning device 100 may include a cap 204. The cap 204 may be coupled to the second end 128 of the fixation element 114. In an embodiment, the cap 204 is threadably coupled to the fixation element 114. Alternatively, the cap 204 may be press-fitted to the fixation element 114 or an integral portion of the fixation element 114. Further, the cap 204 may include an opening 206 through which the shaft portion 184 of the actuator element 122 may be extended across. As shown in FIG. 1, the head portion 182 of the actuator element 122 may extend outwardly from the cap 204, and rest on the cap 204. The piston 118, the bore 134, the actuator element 122, and the opening 206 are coaxial to each other, and the actuator element 122 extends along an axis (co-axial with main axis 136) of the bore 134. Further a main axis of movement of the piston 118 is parallel to a main axis 103 of the screw 102. The main axis of movement of the piston 118 is main axis 136.

Further, a volume 208 is defined together by the piston chamber 178 and the chamber 150, and is configured to store the fluid. Therefore, the volume 208 is defined at least partly by the piston 118, the fixation element 114, and/or the support element 116.

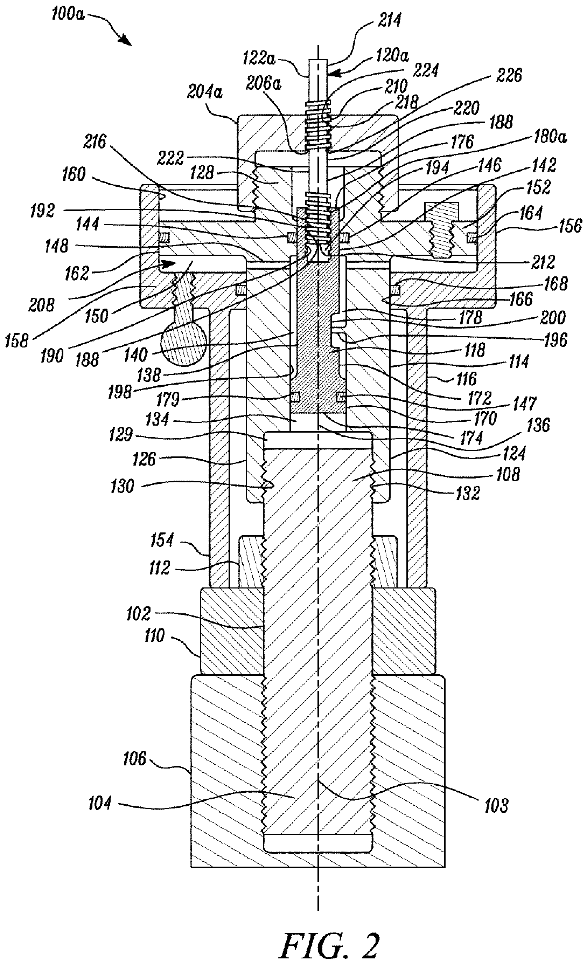

Referring to FIG. 2, an alternative embodiment of a screw tensioning device 100a is shown. The screw tensioning device 100a includes the fixation element 114, the support element 116, the volume 208, the piston 118, and an actuator assembly 120a. The actuator assembly 120a includes an actuator element 122a coupled to the piston 118 at one end and coupled to the fixation element 114 at another end. The actuator element 122a is connected with the rod portion 172 of the piston 118 by a first threaded connection 180a and connected with the fixation element 114 by a second threaded connection 210. In certain implementations, the first threaded connection 180a is a right hand threaded connection and the second threaded connection 210 is a left hand threaded connection. In some other implementations, the first threaded connection 180a is a left hand threaded connection and the second threaded connection 210 is a right hand threaded connection. Optionally, both the first threaded connection 180a and the second threaded connection 210 may be right hand threaded connections or left hand threaded connections. In such scenarios, a pitch of threads of the first threaded connection 180a may be different from a pitch of threads associated with the second threaded connection 210.

As shown in FIG. 2, the actuator element 122a includes a first end 212, a second end 214, first threads 216 formed in proximity to the first end 212, and second threads 218 formed in proximity to the second end 214 and distal from the first end 212. The first threads 216 and the second threads 218 are formed on an outer surface 220 of the actuator element 122a, and may be separated from each other by an unthreaded shaft portion 222. The actuator element 122a is positioned coaxial to the piston 118, and the first threads 216 are engaged with the inner threads 190 of the piston 118, thereby forming the first threaded connection 180a. The second threads 218 are in engagement with inner threads 224 formed at an inner surface 226 of an opening 206a of a cap 204a coupled to the fixation element 114. In an embodiment, the cap 204a is threadably coupled to the fixation element 114. Alternatively, the cap 204a may be press-fitted to the fixation element 114 or an integral portion of the fixation element 114. The second threads 218 and the inner threads 224 of the opening 206a together form the second threaded connection 210. As shown in FIG. 2, a portion of the actuator element 122a may extend outwardly from the cap 204a. The piston 118, the bore 134, the actuator element 122a, and the opening 206a are coaxial to each other, and the actuator element 122a extends along the main axis 136 of the bore 134.

As the actuator element 122a is rotated either manually or by using a tool, the first threads 216 rotate relative to the inner threads 190 formed in the cavity 194 of the piston 118. In response to the rotation of the first threads 216 of the actuator element 122a, the piston 118 moves in a linear and axial direction within the bore 134. Further, due to presence of the second threads 218 and the second threaded connection 210, for a same rotation of the actuator element 122a, the piston 118 may travel a relatively larger axial distance as compared to the travel of the piston 118 when the second threaded connection 210 is omitted. As shown in FIG. 2, the piston 118 may move in an upward direction (i.e. towards the second end 128 of the fixation element 114) in response to the clock-wise rotation of the actuator element 122a. Further, as the fixation element 114 includes the guide structure 196 and the piston 118 includes the mating structure 200, the rotation of the piston 118 may also be restricted or prevented during the axial or linear movement of piston 118.

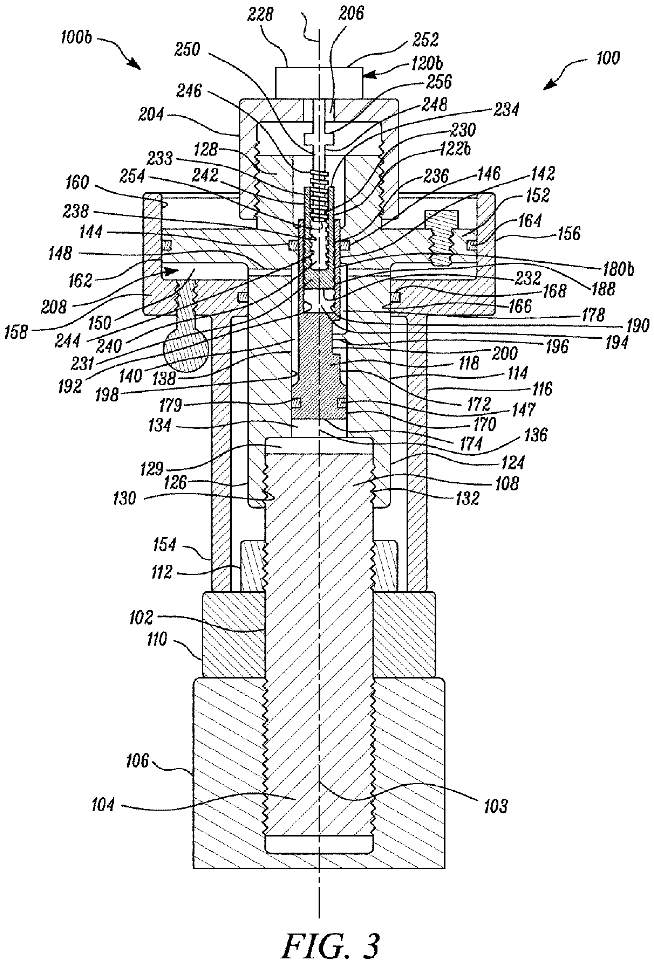

Referring to FIG. 3, a screw tensioning device 100b is shown according to an embodiment of the disclosure. The screw tensioning device 100b includes the fixation element 114, the support element 116, the volume 208, the piston 118, a cap 204, and an actuator assembly 120b. The actuator assembly 120b includes an actuator element referred to as a first actuator element 122b and a second actuator element 228. The first actuator element 122b is connected to the rod portion 172 of the piston 118 by a first threaded connection 180b and is connected to the second actuator element 228 by a third threaded connection 230. As shown in FIG. 3, the first actuator element 122b is a shaft having a first end portion 231, a first end 232, a second end portion 233, a second end 234, first threads 236, third threads 238, and a recess 240. The first end portion 231 is engaged with the piston 118 and the second end portion 233 is engaged with the second actuator element 228. As shown in FIG. 3, the piston 118 includes the cavity 194 to receive the first end portion 231 of the first actuator element 122b. The first actuator element 122b is positioned within the fixation element 114, and includes the first threads 236 formed at an outer surface 242 of the first actuator element 122b. The third threads 238 are formed at an inner surface 244 of the recess 240. Therefore, the third threads 238 form internal threads of the recess 240. As shown in FIG. 3, the recess 240 is formed at the second end portion 233 to receive the second actuator element 228, and the recess 240 may extend axially from the second end 234 of the first actuator element 122b towards the first end 232. In an embodiment, the recess 240 may extend partially in the first end portion 231. In certain implementations, one of the first threads 236 and the third threads 238 are right hand threads and the other of the first threads 236 and the third threads 238 are left hand threads.

As shown in FIG. 3, the first threads 236 are in engagement with the inner threads 190 of the piston 118 - thereby forming the first threaded connection 180b. Also, the third threads 238 are in engagement with fourth threads 246 formed on an outer surface 248 of the second actuator element 228 - thereby forming the third threaded connection 230. In an embodiment, the first threaded connection 180b is a right hand threaded connection and the third threaded connection 230 is a left hand threaded connection. In some other implementations, the first threaded connection 180b is a left hand threaded connection and the third threaded connection 230 is a right hand threaded connection. Optionally, both the first threaded connection 180b and the third threaded connection 230 may be right hand threaded connections or left hand threaded connections. In such scenarios, a pitch of threads of the first threaded connection 180b may be different from a pitch of threads associated with the third threaded connection 230.

In an embodiment, the second actuator element 228 is a screw having a shaft portion 250 and a head portion 252. The shaft portion 250 is at least partly positioned within the fixation element 114 and is configured to move within the bore 134. The fourth threads 246 are formed on the shaft portion 250 in proximity to a first end 254 of the second actuator element 228. Further, a portion of the shaft portion 250 is received within the recess 240 and engaged with the first actuator element 122b. The head portion 252 may be in the form of a head of the screw and is positioned outside of the fixation element 114. The second actuator element 228 further includes a stopper structure 256 to restrict an axial movement of the first actuator element 122b relative to the second actuator element 228. As shown in FIG. 3, the stopper structure 256 is a protrusion extending radially outwardly from the outer surface 248 of the shaft portion 250. The stopper structure 256 may be positioned distal from the first end 254 and may be proximal to the head portion 252. Further, the shaft portion 250 extends through the opening 206 in the cap 204, and the head portion 252 rests on the cap 204. The first actuator element 122b, the second actuator element 228, the piston 118, the bore 134, and the opening 206, are coaxial to each other.

As the second actuator element 228 is rotated either manually or by using a tool, the fourth threads 246 rotate relative to the third threads 238 formed in the recess 240 of the first actuator element 122b. In response to the rotation of the fourth threads 246 of the second actuator element 228, the first actuator element 122b rotates about the main axis 136, causing a translational movement of the first actuator element 122b in a linear and axial direction relative to the second actuator element 228. Further, as the first actuator element 122b moves upwards (i.e. towards the cap 204) in the axial direction relative to the second actuator element 228, the second end 234 of the first actuator element 122b may come into contact with the stopper structure 256, restricting additional upward movement of the first actuator element 122b relative to the second actuator element 228. Thereafter, on further rotation of the second actuator element 228, the first actuator element 122b and the second actuator element 228 may rotate together as a single unit. In response to the rotation of the first actuator element 122b, the first threads 236 rotates relative to the inner threads 190, causing a linear and axial movement of the piston 118 within the bore 134.

As the actuator assembly 120b includes two actuator elements 122b, 228 and multiple threaded connections 230, 180b, for a same rotation of the second actuator element 228, the piston 118 may travel a relatively larger distance as compared to travel of the piston 118 when the actuator assembly 120b includes only one actuator element. Further, as the fixation element 114 includes the guide structure 196 and the piston 118 includes the mating structure 200, the rotation of the piston 118 may also be restricted or prevented during the axial and/or linear movement of piston 118.

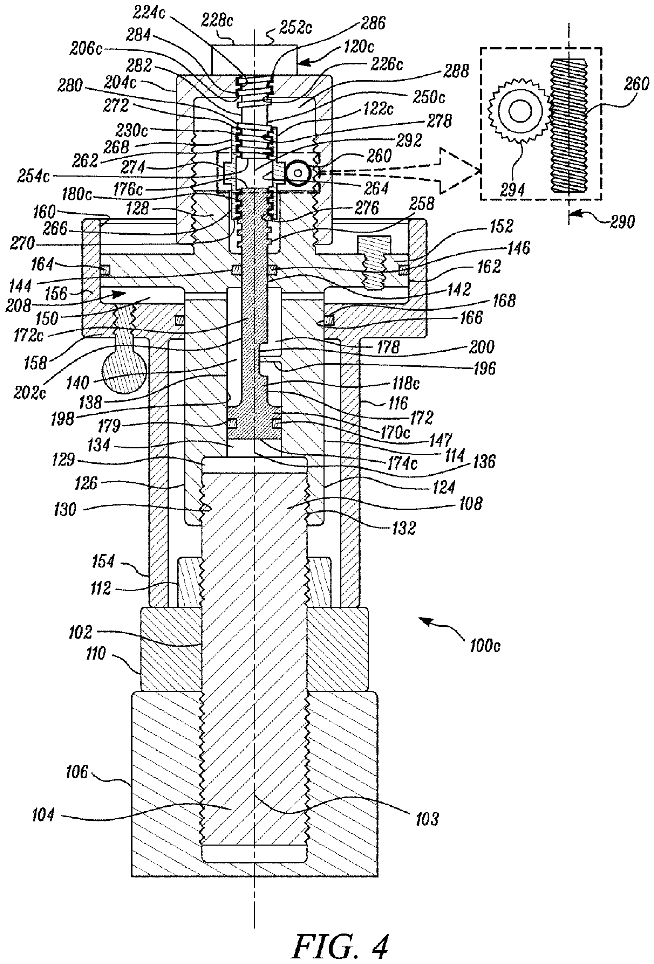

Referring to FIG. 4, a screw tensioning device 100c is shown according to an embodiment of the disclosure. The screw tensioning device 100c includes the fixation element 114, the support element 116, the volume 208, a piston 118c, and an actuator assembly 120c. The piston 118c includes a head portion 170c and a rod portion 172c, a head end 174c, and a rod end 176c. Further, the piston 118c includes threads 258 formed at an outer surface 202c of the rod portion 172c and in proximity to the rod end 176c of the piston 118c. The piston 118c is positioned and movable within the fixation element 114. It may be appreciated that the piston 118c differs in certain structural and assembly with the actuator assembly 120c than those of the piston 118. As shown in FIGS. 1-3, the piston 118 includes the cavity 194, while in the piston 118c the cavity 194 is absent. However, the arrangement, the position, and the assembly of the piston 118c within the bore 134 of the fixation element 114 is similar to that of the piston 118.

The actuator assembly 120c includes an actuator element referred to as a first actuator element 122c, a second actuator element 228c, and a worm shaft 260. The first actuator element 122c is connected to the rod portion 172c of the piston 118c by a first threaded connection 180c and is connected to the second actuator element 228c by a third threaded connection 230c. As shown in FIG. 4, the first actuator element 122c is a sleeve having an outer surface 262, an inner surface 264, a first end portion 266, a second end portion 268, a first end 270, a second end 272, and a flange 274. Further, the first actuator element 122c may be positioned partly within the bore 134 between the piston 118c and the second actuator element 228c along an axial direction of the piston 118c. The first actuator element 122c includes first threads 276 formed at the first end portion 266 and third threads 278 formed at the second end portion 268. Both the first threads 276 and the third threads 278 are formed at the inner surface 264 of the sleeve. The first threads 276 are in engagement with the threads 258 formed at a rod portion 172c of the piston 118c - thereby forming the first threaded connection 180c, while the third threads 278 are engaged with fourth threads 280 formed at an outer surface 282 of the second actuator element 228c - thereby forming the third threaded connection 230c. In an embodiment, the first threaded connection 180c is a left hand threaded connection and the third threaded connection 230c is a right hand threaded connection. In another embodiment, the first threaded connection 180c is a right hand threaded connection and the third threaded connection 230c is a left hand threaded connection.

Again referring to FIG. 4, the second actuator element 228c includes a shaft portion 250c, a head portion 252c, a first end 254c. The shaft portion 250c is connected to the first actuator element 122c by the third threaded connection 230c. The shaft portion 250c includes the fourth threads 280 formed proximal to the first end 254c of the second actuator element 228c. Further, the second actuator element 228c includes fifth threads 284 formed at an outer surface 282 of the shaft portion 250c proximal to the head portion 252c. The shaft portion 250c may be partly positioned within the fixation element 114, while the head portion 252c is positioned outside the fixation element 114. Further, the second actuator element 228c is coupled to the fixation element 114 by a fourth threaded connection 286. The fifth threads 284 of the second actuator element 228c are engaged with inner threads 224c formed at an inner surface 226c of an opening 206c of a cap 204c coupled to the fixation element 114. Further, the head portion 252c extends outwards of the fixation element 114 and the cap 204c, and is configured to rest on the cap 204c. In an embodiment, the fourth threaded connection 286 is a left hand thread connection. In an embodiment, the piston 118, the first actuator element 122c, the second actuator element 228c, and the opening 206c, are co-axial to each other.

Further, the worm shaft 260 is positioned inside a space 288 defined between the second end 128 of the fixation element 114 and the cap 204c, and is engaged with the first actuator element 122c. The worm shaft 260 extends perpendicular to a longitudinal length of the first actuator element 122c such that a rotational axis 290 of the worm shaft 260 may be substantially perpendicular to an axis 292 of the first actuator element 122c. Although the rotational axis 290 is shown as perpendicular to the main axis 136, it may be appreciated that the rotational axis 290 and the main axis 136 may be inclined to each other at any suitable angle. Further, the main axis of movement of the piston 118c is the main axis 136. As shown in FIG. 4, the worm shaft 260 is engaged with the flange 274 of the first actuator element 122c and is configured to drive the first actuator element 122c. The flange 274 includes a plurality of teeth 294, which are engaged with the worm shaft 260, and extends radially outwardly from the outer surface 262 of the first actuator element 122c. Further, the flange 274 may be positioned in an axial direction between the first end portion 266 and the second end portion 268 of the first actuator element 122c. As the first actuator element 122c is engaged with the worm shaft 260, an actuation of the worm shaft 260 may enable a movement of the first actuator element 122c along the main axis 136.

As the first actuator element 122c (or the sleeve) is in engagement with the piston 118c through the threads 258, a movement (rotation) of the worm shaft 260 may cause a linear movement of the piston 118c along the main axis 136. In an embodiment, a translation of the piston 118c is caused upwards towards the cap 204c. Further, as the fixation element 114 includes the guide structure 196 and the piston 118c includes the mating structure 200, the rotation of the piston 118 may also be restricted or prevented during the axial and/or linear movement of piston 118c. Also, since an engagement between the first actuator element 122c (or the sleeve) and the second actuator element 228c is a right hand thread connection, and a connection between the second actuator element 228c and the cap 204c is a left hand thread connection, a rotational movement of the second actuator element 228c is avoided when a rotation of the worm shaft 260 is being executed.

### Industrial Applicability

The operation of the screw tensioning device 100 is now described. To create a tension in the screw 102, the piston 118 is moved away from the second component 110 by rotating the actuator element 122 of the actuator assembly 120. The actuator element 122 may be rotated either manually or by using a tool. As the actuator element 122 is coupled to the piston 118 by the first threaded connection 180, the rotation of the actuator element 122 causes a linear and an axial movement of the piston 118 along the main axis 136. For example, a clockwise rotation of the actuator element 122 may cause a linear and an axial movement of the piston 118 in an upward direction (i.e. away from the second component 110 and towards the second end 128 of the fixation element 114. A rotational tendency of the piston 118 may be prevented due to a friction between the piston 118 and the wall 138 of the bore 134. Additionally, the guide structure 196 and the mating structure 200 may together restrict or prevent a rotation the piston 118 within the bore 134. As the rotation of the piston 118 within the bore 134 is prevented, a damage to the first sealing ring 146 and/or the second sealing ring 147 is minimized.

By moving the piston 118 upwards, which means away from the screw 102, the fluid from the piston chamber 178 is pushed into the chamber 150 through the openings 148. This may increase a pressure of the fluid in the chamber 150, which will act against the plate 152, in turn moving the plate 152 in the upward direction relative to the support element 116. As the fixation element 114 is in threaded engagement with the screw 102, an upward movement of the fixation element 114 generates a tension in the screw 102. Therefore, a movement of the actuator element 122 causes an axial movement of the piston 118 within the fixation element 114, and the movement of the piston 118 manipulates the volume 208, and thereby moves the fixation element 114 with respect to the support element 116. To retain the tension of the screw 102, the nut 112 is fastened on the screw 102 so that the nut 112 abuts the second component 110 tightly. The fastening of the nut 112 is performed by reaching the nut 112 through the openings in the support element 116 with a tool, to turn the nut 112 on the screw 102.

The operation of the screw tensioning device 100a is now described. To create a tension in the screw 102, the piston 118 is moved away from the second component 110 by rotating the actuator element 122a of the actuator assembly 120a. The actuator element 122a may be rotated either manually or by using a tool. As the actuator element 122a is coupled to the piston 118 by the first threaded connection 180a, the rotation of the actuator element 122 causes a linear and an axial movement of the piston 118 along the main axis 136. For example, a clockwise rotation of the actuator element 122a may cause a linear and an axial movement of the piston 118 in an upward direction (i.e. away from the second component 110 and towards the second end 128 of the fixation element 114. Since the actuator element 122a is also connected to the fixation element 114 by the second threaded connection 210, the piston 118 moves a relatively larger distance in a linear and axial direction along the main axis 136 as compared to a linear movement of a piston of a screw tensioning device from which the second threaded connection is omitted. A rotational tendency of the piston 118 may be prevented due to a friction between the piston 118 and the wall 138 of the bore 134. Additionally, the guide structure 196 and the mating structure 200 may together restrict or prevent a rotation the piston 118 within the bore 134. As the rotation of the piston 118 within the bore 134 is prevented, a damage to the first sealing ring 146 and/or the second sealing ring 147 is minimized.

By moving the piston 118 upwards, which means away from the screw 102, the fluid from the piston chamber 178 is pushed into the chamber 150 through the openings 148. This may increase a pressure of the fluid in the chamber 150, which will act against the plate 152, in turn moving the plate 152 in the upward direction relative to the support element 116. As the fixation element 114 is in threaded engagement with the screw 102, an upward movement of the fixation element 114 generates a tension in the screw 102. Therefore, a movement of the actuator element 122a causes an axial movement of the piston 118 within the fixation element 114, and the movement of the piston 118 manipulates the volume 208, and thereby moves the fixation element 114 with respect to the support element 116. To retain the tension of the screw 102, the nut 112 is fastened on the screw 102 so that the nut 112 abuts the second component 110 tightly. The fastening of the nut 112 is performed by reaching the nut 112 through the openings in the support element 116 with a tool, to turn the nut 112 on the screw 102.

The operation of the screw tensioning device 100b is now described. To create a tension in the screw 102, the piston 118 is moved away from the second component 110 by moving the first actuator element 122b of the actuator assembly 120b. The first actuator element 122b is moved or rotated by rotating the second actuator element 228. The second actuator element 228 may be rotated either manually or by using a tool. As the second actuator element 228 is coupled to the first actuator element 122b by the third threaded connection 230, the rotation of the second actuator element 228 may cause a rotational and/or translation movement of the first actuator element 122b along the main axis 136. Since the first actuator element 122b is connected to the piston 118 by the first threaded connection 180b, the piston 118 moves in a linear and an axial direction along the main axis 136 in response to the movement of the first actuator element 122b. For example, a clockwise rotation of the first actuator element 122b may cause a linear and an axial movement of the piston 118 in an upward direction (i.e. away from the second component 110 and towards the second end 128 of the fixation element 114. A rotational tendency of the piston 118 may be prevented due to a friction between the piston 118 and the wall 138 of the bore 134. Additionally, the guide structure 196 and the mating structure 200 may together restrict or prevent a rotation the piston 118 within the bore 134. As the rotation of the piston 118 within the bore 134 is prevented, a damage to the first sealing ring 146 and/or the second sealing ring 147 is minimized.

By moving the piston 118 upwards, which means away from the screw 102, the fluid from the piston chamber 178 is pushed into the chamber 150 through the openings 148. This may increase a pressure of the fluid in the chamber 150, which will act against the plate 152, in turn moving the plate 152 in the upward direction relative to the support element 116. As the fixation element 114 is in threaded engagement with the screw 102, an upward movement of the fixation element 114 generates a tension in the screw 102. Therefore, a movement of the actuator element 122b causes an axial movement of the piston 118 within the fixation element 114, and the movement of the piston 118 manipulates the volume 208, and thereby moves the fixation element 114 with respect to the support element 116. To retain the tension of the screw 102, the nut 112 is fastened on the screw 102 so that the nut 112 abuts the second component 110 tightly. The fastening of the nut 112 is performed by reaching the nut 112 through the openings in the support element 116 with a tool, to turn the nut 112 on the screw 102.

The operation of the screw tensioning device 100c is now described. To create a tension in the screw 102, the piston 118c is moved away from the second component 110 by moving the first actuator element 122c of the actuator assembly 120c. The first actuator element 122c is moved or rotated by rotating the worm shaft 260. Owing to fourth threaded connection 286 being left hand threaded connection and the third threaded connection 230c being the right hand threaded connection or vice-versa, the rotational movement of the second actuator element 228c is blocked or prevented when the first actuator element 122c is moved or rotated in response to a movement of the worm shaft 260. Since the first actuator element 122c is connected to the piston 118c by the first threaded connection 180c, the piston 118c moves in a linear and an axial direction along the main axis 136 in response to the movement of the first actuator element 122c. For example, an anti-clockwise rotation of the first actuator element 122c may cause a linear and an axial movement of the piston 118c in an upward direction (i.e. away from the second component 110 and towards the second end 128 of the fixation element 114. A rotational tendency of the piston 118c may be prevented due to a friction between the piston 118c and the wall 138 of the bore 134. Additionally, the guide structure 196 and the mating structure 200 may together restrict or prevent a rotation the piston 118c within the bore 134. As the rotation of the piston 118c within the bore 134 is prevented, a damage to the first sealing ring 146 and/or the second sealing ring 147 is minimized.

By moving the piston 118c upwards, which means away from the screw 102, the fluid from the piston chamber 178 is pushed into the chamber 150 through the openings 148. This may increase a pressure of the fluid in the chamber 150, which will act against the plate 152, in turn moving the plate 152 in the upward direction relative to the support element 116. As the fixation element 114 is in threaded engagement with the screw 102, an upward movement of the fixation element 114 generates a tension in the screw 102. Therefore, a movement of the actuator element 122c causes an axial movement of the piston 118c within the fixation element 114, and the movement of the piston 118c manipulates the volume 208, and thereby moves the fixation element 114 with respect to the support element 116. To retain the tension of the screw 102, the nut 112 is fastened on the screw 102 so that the nut 112 abuts the second component 110 tightly. The fastening of the nut 112 is performed by reaching the nut 112 through the openings in the support element 116 with a tool, to turn the nut 112 on the screw 102.

While aspects of the present disclosure have been particularly shown and described with reference to the embodiments above, it will be understood by those skilled in the art that various additional embodiments may be contemplated by the modification of the disclosed machines, systems and methods.

## Claims

1. A screw tensioning device (100, 100a, 100b, 100c) for tensioning or loosening tensionable screw connections comprising:
a fixation element (114) to be connected to a screw (102);
a support element (116) moveable relative to the fixation element (114) and arranged to be moved relative to the fixation element (114) to apply tension to or remove tension from the screw (102);
a piston (118, 118c) positioned and movable within the fixation element (114), the piston including a rod end (176, 176c), a rod portion (172, 172c) and a groove;
an actuator assembly (120, 120a, 120b, 120c) including an actuator element, the actuator element (122, 122a, 122b, 122c) having a first threaded connection (180, 180a, 180b, 180c) with the rod portion (172, 172c) of the piston (118, 118c); and
a volume (208) containing a fluid, wherein the volume is defined at least partly by the piston (118, 118c), the fixation element (114), or the support element (116),
wherein movement of the actuator element (122, 122a, 122b, 122c) causes an axial movement of the piston (118, 118c) within the fixation element (114), and the movement of the piston (118, 118c) manipulates the volume (208) and thereby moves the fixation element (114) with respect to the support element (116), and
wherein the fixation element (114) includes a protrusion extending radially inwards and engaged with the groove of the piston (118, 118c) to prevent a rotational movement of the piston (118, 118c) within the fixation element (114).

2. The screw tensioning device (100a) of claim 1, wherein the actuator element (122a) is coupled to the fixation element (114) by a second threaded connection (210).

3. The screw tensioning device (100b, 100c) of claim 1, wherein the actuator element is a first actuator element (122b, 122c) and the actuator assembly (120b, 120c) further includes a second actuator element (228, 228c) having a third threaded connection (230, 230c) with the first actuator element (122b, 122c).

4. The screw tensioning device (100b) of claim 3, wherein the first actuator element (122b) is a shaft having a first end portion (231) engaged with the piston (118) and a second end portion (233) engaged with the second actuator element (228).

5. The screw tensioning device (100b) of claim 3, wherein:
the piston (118) includes a cavity (194) formed at the rod end (176) to receive the first end portion (231) of the first actuator element (122b), the cavity (194) includes inner threads (190) to form the first threaded connection (180b) with the first actuator element (122b), and
the first actuator element (122b) includes a recess (240) formed at the second end portion (233) to receive the second actuator element (228), the recess (240) includes internal threads to form the third threaded connection (230) with the second actuator element (228).

6. The screw tensioning device (100b) of claim 3, wherein the second actuator element (228) includes a stopper structure (256) to limit an axial movement of the first actuator element (122b) relative to the second actuator element (228).

7. The screw tensioning device (100c) of claim 3, wherein the first actuator element (122c) is a sleeve having an inner surface (264) with a first end portion (266) and a second end portion (268), wherein the first end portion (266) is engaged with the piston (118c) and the second end portion (268) is engaged with the second actuator element (228c).

8. The screw tensioning device (100c) of claim 7, wherein the actuator assembly (120c) further includes a worm shaft (260) engaged with the sleeve.

## Patentansprüche

1. Schraubenspannvorrichtung (100, 100a, 100b, 100c) zum Spannen oder Lösen von spannbaren Schraubverbindungen, umfassend:
ein Befestigungselement (114), das mit einer Schraube (102) verbunden werden soll;
ein Stützelement (116), das in Bezug auf das Befestigungselement (114) beweglich ist und in Bezug auf das Befestigungselement (114) zum Bewegen angeordnet ist, um eine Spannung auf die Schraube (102) aufzubringen oder Spannung von der Schraube zu lösen;
einen Kolben (118, 118c), der innerhalb des Befestigungselements (114) positioniert und beweglich ist, wobei der Kolben ein Stangenende (176, 176c), einen Stangenabschnitt (172, 172c) und eine Nut einschließt;
eine Aktuatoranordnung (120, 120a, 120b, 120c) einschließlich eines Aktuatorelements, wobei das Aktuatorelement (122, 122a, 122b, 122c) eine erste Gewindeverbindung (180, 180a, 180b, 180c) mit dem Stangenabschnitt (172, 172c) des Kolbens (118, 11 8c) aufweist; und
ein Volumen (208), das ein Fluid enthält, wobei das Volumen zumindest teilweise durch den Kolben (118, 118c), das Befestigungselement (114) oder das Stützelement (116) definiert ist,
wobei die Bewegung des Aktuatorelements (122, 122a, 122b, 122c) eine axiale Bewegung des Kolbens (118, 118c) innerhalb des Befestigungselements (114) bewirkt, und die Bewegung des Kolbens (118, 118c) das Volumen (208) manipuliert und dadurch das Befestigungselement (114) in Bezug auf das Stützelement (116) bewegt, und
wobei das Befestigungselement (114) einen Vorsprung einschließt, der sich radial nach innen erstreckt und mit der Nut des Kolbens (118, 118c) in Eingriff steht, um eine Drehbewegung des Kolbens (118, 118c) innerhalb des Befestigungselements (114) zu verhindern.

2. Schraubenspannvorrichtung (100a) nach Anspruch 1, wobei das Aktuatorelement (122a) über eine zweite Gewindeverbindung (210) mit dem Befestigungselement (114) gekoppelt ist.

3. Schraubenspannvorrichtung (100b, 100c) nach Anspruch 1, wobei das Aktuatorelement ein erstes Aktuatorelement (122b, 122c) ist und die Aktuatoranordnung (120b, 120c) ferner ein zweites Aktuatorelement (228, 228c) mit einer dritten Gewindeverbindung (230, 230c) mit dem ersten Aktuatorelement (122b, 122c) einschließt.

4. Schraubenspannvorrichtung (100b) nach Anspruch 3, wobei das erste Aktuatorelement (122b) eine Welle mit einem ersten Endabschnitt (231), der mit dem Kolben (118) in Eingriff steht, und einem zweiten Endabschnitt (233), der mit dem zweiten Aktuatorelement (228) in Eingriff steht, ist.

5. Schraubenspannvorrichtung (100b) nach Anspruch 3, wobei: der Kolben (118) einen Hohlraum (194) einschließt, der an dem Stangenende (176) ausgebildet ist, um den ersten Endabschnitt (231) des ersten Aktuatorelements (122b) aufzunehmen, der Hohlraum (194) Innengewinde (190) einschließt, um die erste Gewindeverbindung (180b) mit dem ersten Aktuatorelement (122b) zu bilden, und
das erste Aktuatorelement (122b) eine Aussparung (240) einschließt, die an dem zweiten Endabschnitt (233) ausgebildet ist, um das zweite Aktuatorelement (228) aufzunehmen, die Aussparung (240) Innengewinde einschließt, um die dritte Gewindeverbindung (230) mit dem zweiten Aktuatorelement (228) zu bilden.

6. Schraubenspannvorrichtung (100b) nach Anspruch 3, wobei das zweite Aktuatorelement (228) eine Stopperstruktur (256) einschließt, um eine axiale Bewegung des ersten Aktuatorelements (122b) in Bezug auf das zweite Aktuatorelement (228) zu begrenzen.

7. Schraubenspannvorrichtung (100c) nach Anspruch 3, wobei das erste Aktuatorelement (122c) eine Hülse mit einer inneren Oberfläche (264) mit einem ersten Endabschnitt (266) und einem zweiten Endabschnitt (268) ist, wobei der erste Endabschnitt (266) mit dem Kolben (118c) und der zweite Endabschnitt (268) mit dem zweiten Aktuatorelement (228c) in Eingriff steht.

8. Schraubenspannvorrichtung (100c) nach Anspruch 7, wobei die Aktuatoranordnung (120c) ferner eine mit der Hülse in Eingriff stehende Schneckenwelle (260) einschließt.

## Revendications

1. Dispositif tendeur à vis (100, 100a, 100b, 100c) pour tendre ou desserrer des raccords vissés pouvant être tendus comprenant :
un élément de fixation (114) destiné à être raccordé à une vis (102) ;
un élément de support (116) mobile par rapport à l'élément de fixation (114) et agencé pour être déplacé par rapport à l'élément de fixation (114) pour appliquer une tension à, ou retirer une tension de, la vis (102) ;
un piston (118, 118c) positionné et mobile au sein de l'élément de fixation (114), le piston incluant une extrémité de tige (176, 176c), une partie de tige (172, 172c) et une rainure ;
un ensemble actionneur (120, 120a, 120b, 120c) incluant un élément actionneur, l'élément actionneur (122, 122a, 122b, 122c) ayant un premier raccord fileté (180, 180a, 180b, 180c) avec la partie de tige (172, 172c) du piston (118, 11 8c) ; et
un volume (208) contenant un fluide, dans lequel le volume est défini au moins partiellement par le piston (118, 118c), l'élément de fixation (114) ou l'élément de support (116),
dans lequel un mouvement de l'élément actionneur (122, 122a, 122b, 122c) provoque un mouvement axial du piston (118, 118c) au sein de l'élément de fixation (114), et le mouvement du piston (118, 118c) modifie le volume (208) et déplace de ce fait l'élément de fixation (114) par rapport à l'élément de support (116), et
dans lequel l'élément de fixation (114) inclut une partie saillante s'étendant radialement vers l'intérieur et en prise avec la rainure du piston (118, 118c) pour empêcher un mouvement de rotation du piston (118, 118c) au sein de l'élément de fixation (114).

2. Dispositif tendeur à vis (100a) selon la revendication 1, dans lequel l'élément actionneur (122a) est couplé à l'élément de fixation (114) par un deuxième raccord fileté (210).

3. Dispositif tendeur à vis (100b, 100c) selon la revendication 1, dans lequel l'élément actionneur est un premier élément actionneur (122b, 122c) et l'ensemble actionneur (120b, 120c) inclut en outre un deuxième élément actionneur (228, 228c) ayant un troisième raccord fileté (230, 230c) avec le premier élément actionneur (122b, 122c).

4. Dispositif tendeur à vis (100b) selon la revendication 3, dans lequel le premier élément actionneur (122b) est un arbre ayant une première partie d'extrémité (231) en prise avec le piston (118) et une deuxième partie d'extrémité (233) en prise avec le deuxième élément actionneur (228).

5. Dispositif tendeur à vis (100b) selon la revendication 3, dans lequel : le piston (118) inclut une cavité (194) formée au niveau de l'extrémité de tige (176) pour recevoir la première partie d'extrémité (231) du premier élément actionneur (122b), la cavité (194) inclut des filetages internes (190) pour former le premier raccord fileté (180b) avec le premier élément actionneur (122b), et
le premier élément actionneur (122b) inclut un évidement (240) formé au niveau de la deuxième partie d'extrémité (233) pour recevoir le deuxième élément actionneur (228), l'évidement (240) inclut des filetages internes pour former le troisième raccord fileté (230) avec le deuxième élément actionneur (228).

6. Dispositif tendeur à vis (100b) selon la revendication 3, dans lequel le deuxième élément actionneur (228) inclut une structure de butée (256) pour limiter un mouvement axial du premier élément actionneur (122b) par rapport au deuxième élément actionneur (228).

7. Dispositif tendeur à vis (100c) selon la revendication 3, dans lequel le premier élément actionneur (122c) est un manchon ayant une surface interne (264) avec une première partie d'extrémité (266) et une deuxième partie d'extrémité (268), dans lequel la première partie d'extrémité (266) est en prise avec le piston (118c) et la deuxième partie d'extrémité (268) est en prise avec le deuxième élément actionneur (228c).

8. Dispositif tendeur à vis (100c) selon la revendication 7, dans lequel l'ensemble actionneur (120c) inclut en outre un arbre de vis sans fin (260) en prise avec le manchon.
